# EUROPEAN PATENT SPECIFICATION

(11) **EP 2 942 241 B1**
(45) Date of publication and mention of the grant of the patent: **31.08.2016**
(21) Application number: 15166537.9
(22) Date of filing: 06.05.2015
(51) Int. Cl.: B60R 16/03, B62J 6/00, F02P 1/08, H02J 1/14, B60Q 1/14

(54) **SADDLE RIDING TYPE VEHICLE**
SATTELFAHRZEUG
VÉHICULE DE TYPE À ENFOURCHER

(30) Priority: 09.05.2014 JP 2014097733
(43) Date of publication of application: 11.11.2015
(73) Proprietor: Yamaha Hatsudoki Kabushiki Kaisha, Iwata-shi, Shizuoka 438-8501 (JP)
(72) Inventor: Hirata, Gou, Iwata-shi, Shizuoka 438-8501 (JP); Mikata, Junichiro, Iwata-shi, Shizuoka 438-8501 (JP)
(74) Representative: Grünecker Patent- und Rechtsanwälte PartG mbB

(56) References cited:
- EP-A2- 0 769 418
- EP-A2- 2 559 592
- DE-A1- 3 401 602
- JP-A- H07 103 112
- NL-A- 9 001 176
- US-A- 5 220 245
- US-A1- 2012 323 441

## Description

### BACKGROUND OF THE INVENTION

### (1) Field of the Invention

This invention relates to a saddle riding type vehicle having an engine and a dynamo which generates electricity by rotation of the engine.

### (2) Description of the Related Art

A saddle riding type vehicle has an engine and a dynamo. The engine generates power for propelling the saddle riding type vehicle. The dynamo generates electricity using part of the engine power. The electric power generated by the dynamo is supplied to various loads (electric loads) provided on the saddle riding type vehicle. Here, a load for starting the engine is called a "starting device" for expediency.

The starting device includes a fuel injection device and an ignition device, for example. The fuel injection device injects fuel into the engine. The fuel injection device has a fuel pump and an injector, for example. The fuel pump and the injector consume electric power, respectively. The ignition device ignites a fuel-air mixture in the engine. The ignition device has electrodes which generate sparks by application of a relatively high voltage. Thus, the ignition device also consumes electric power.

Loads other than the starting device include a headlight, a taillight, a brake light, a turn indicator, a meter lamp and a horn, for example.

When the engine is started or when the engine is in an idling state, the electric power produced by the dynamo is small compared with the time when the saddle riding type vehicle is traveling. This is because the lower rotational frequency of the engine results in the smaller electric power produced by the dynamo.

Where the saddle riding type vehicle has a battery, even if the electric power supplied from the dynamo to the starting device is insufficient, the battery compensates for the insufficiency. However, if the battery has deteriorated, it is difficult for the battery to compensate for the insufficiency. Where, on the other hand, the saddle riding type vehicle has no battery, the insufficiency is not compensated for.

Technique described in Japanese Unexamined Patent Publication H07-103112

This patent document discloses a control apparatus which can reduce the load of a dynamo when starting an engine. This control apparatus is applied to a battery-less vehicle which operates an ignition device with electric power of the dynamo. The control apparatus does not connect loads other than the ignition device to the dynamo until rotational frequency of the engine reaches a predetermined value. Consequently, the electric power of the dynamo is supplied with priority to the ignition device. As a result, the engine can easily be started. The control apparatus connects the other loads to the dynamo when the rotational frequency of the engine has reached the predetermined value. Consequently, the electric power of the dynamo is supplied to the ignition device and other loads.

However, the conventional example with such construction has the following problems.

In recent years, further improvement in fuel efficiency of the saddle riding type vehicle has been desired. What is noted as one of the means for improving fuel efficiency is to set a low rotational frequency of the engine for the time when the engine is in an idling state (hereinafter called "idling rotational frequency" as appropriate). However, since the lower idling rotational frequency makes it the more difficult to maintain the engine in an idling state. It is therefore difficult to set a low idling rotational frequency.

More particularly, output of the dynamo becomes insufficient when the idling rotational frequency is set too low. So, whether the saddle riding type vehicle has a battery or not, the idling rotational frequency is set equal to or higher than a rotational frequency of the engine of the time when the dynamo generates electric power for operating all electric power loads. It is therefore difficult to set a low idling rotational frequency.

### SUMMARY OF THE INVENTION

This invention has been made having regard to the state of the art noted above, and its object is to provide a saddle riding type vehicle capable of inhibiting an insufficiency of electric power supplied from a dynamo to a starting device even at the time of a relatively low idling rotational frequency. Such an object is achieved by a saddle riding type vehicle according to claim 1. Preferred aspects of the present invention are laid down in the accompanying dependent claims.

Inventors herein have made intensive research on a relationship between idling rotational frequency, output of the dynamo, and presence or absence of operation of each load. It has been found as a result that the frequency of all the loads receiving power supply and being in operation when the engine is in an idling state is in practice low. So, further research has been conducted on a relationship between power consumption by each load, and operation/non-operation of each load in time of idling state. It has been found as a result that such relationship has a tendency to allow lowering of the idling rotational frequency.

Based on the above findings, this invention provides the following construction.

A saddle riding type vehicle according to this invention comprises an engine; a dynamo for generating electric power by rotation of the engine; a starting device for starting the engine; a plurality of electrical components excluding the starting device; a controller for controlling supply of electric power to the electrical components; and an electric circuit for electrically connecting the dynamo and the starting device, the dynamo and the electrical components, and the dynamo and the controller, respectively; wherein the starting device includes a fuel injection device for injecting fuel into the engine; and an ignition device for igniting a fuel-air mixture in the engine; the electrical components include a headlight; a taillight; a brake light; a turn indicator; and a horn; at least one of the headlight and the taillight is an electric power reduction electrical component with electric power supplied thereto being adjusted by the controller; a state where the engine is in an idling state, the dynamo supplies electric power to the starting device, the headlight, the taillight and the controller, and the rechargeable battery is disconnected from the electric circuit or is connected to the electric circuit but has no electric storage function is defined as an idling state without an onboard rechargeable battery; a mode in which the dynamo supplies electric power to at least one of the brake light, the turn indicator and the horn is defined as an unsteady electrical component power feed mode; and the controller is arranged to adjust the electric power supplied to the electric power reduction electrical component at a time of the idling state without the onboard rechargeable battery and the unsteady electrical component power feed mode, based on an applied voltage applied to the starting device, the electrical components and the controller.

With the saddle riding type vehicle according to this invention, when the engine rotates, the dynamo will generate electricity. The electric power generated by the dynamo is supplied to the starting device through the electric circuit. The starting device is operated by the electric power supplied thereto. Specifically, the fuel injection device injects fuel into the engine, and the ignition device ignites the fuel-air mixture in the engine. This starts the engine. The output of the dynamo is supplied to the electrical components and the controller through the electric circuit. The controller controls supply of the electric power to the electrical components. The electric power is supplied to the electrical components under control of the controller. This operates the electrical components.

The electrical components include a headlight, a taillight, a brake light, a turn indicator and a horn. Among these, at least either the headlight or the taillight is the electric power reduction electrical component. The controller can adjust the electric power supplied to the electric power reduction electrical component. Neither the brake light, the turn indicator nor the horn is the electric power reduction electrical component.

Now, at least one of a state satisfying (a), (b) and (c1) below and a state satisfying (a), (b) and (c2) below is called the "idling state without the onboard rechargeable battery":
(a) the engine is operating in an idling state;
(b) the dynamo is supplying electric power to the starting device, headlight, taillight and controller;
(c1) the rechargeable battery is disconnected from the electric circuit; and
(c2) the rechargeable battery having no storage function is connected to the electric circuit.

Regarding (a), when the engine is in an idling state, the control amount of an accelerator by the rider is zero. Regarding (b), whether or not the dynamo is supplying electric power to loads other than the starting device, headlight, taillight and controller is irrelevant to whether condition (b) is satisfied or not. Regarding (c1), where the saddle riding type vehicle has the rechargeable battery, (c1) is satisfied by disconnecting the rechargeable battery from the electric circuit. Where the saddle riding type vehicle has no rechargeable battery, (c1) is satisfied without doing anything. Regarding (c2), the state of the rechargeable battery having no storage function means a state where the rechargeable battery has deteriorated so that the rechargeable battery can no longer accumulate electric power. The rechargeable battery does not include a capacitor. The rechargeable battery includes a battery, for example. The idling state without the onboard rechargeable battery may be a state satisfying (a), (b) and (c1), or may be a state satisfying (a), (b) and (c2).

The mode in which the dynamo supplies electric power to at least one of the brake light, the turn indicator and the horn is called the "unsteady electrical component power feed mode".

When a transition is made to the unsteady electrical component power feed mode in the idling state without the onboard rechargeable battery, the electrical components to which the dynamo supplies electric power will increase further. At this time, the controller adjusts the electric power supplied to the electric power reduction electrical component based on the applied voltage applied to the starting device, electrical components and controller. Such control can appropriately adjust the electric power supplied to all the electrical components. As a result, even in the idling state without the onboard rechargeable battery, the electric power supplied to the fuel injection device and ignition device can be secured conveniently. The engine can therefore be effectively maintained in the idling state. In other words, even when the engine is in an idling state, it is possible to inhibit insufficiency of the electric power supplied from the dynamo to the starting device.

The saddle riding type vehicle with the controller described above can set the rotational frequency of the engine in an idling state (hereinafter called "idling rotational frequency") to be relatively low. Specifically, the idling rotational frequency can be set lower than the engine rotational frequency at the time when the dynamo generates electric power equal to a sum total of power consumptions of the starting device, electrical components and controller. Thus, according to this invention, even with the relatively low idling rotational frequency, the electric power of the dynamo can be supplied appropriately to the starting device. In other words, even with the relatively low idling rotational frequency, the dynamo can supply sufficient electric power to the starting device.

The controller may adjust the electric power supplied to the electric power reduction electrical component based on the applied voltage also at other times than when in the idling state without the onboard rechargeable battery and in the unsteady electrical component power feed mode.

This invention is applicable to a saddle riding type vehicle having a rechargeable battery, and also to a saddle riding type vehicle having no rechargeable battery.

The "saddle riding type vehicle" may be a scooter type vehicle driven by a rider whose legs can be kept close together, as well as a vehicle driven by a rider straddling a saddle.

In the teaching described above, it is preferred that the controller is arranged to restrict the electric power supplied to the electric power reduction electrical component when the applied voltage is less than a first voltage value at the time of the idling state without the onboard rechargeable battery and the unsteady electrical component power feed mode. According to this preferred aspect, the electric power supplied to the electric power reduction electrical component can be restricted at an appropriate time. Evan at a time of the idling state without the onboard rechargeable battery and the unsteady electrical component power feed mode, the electric power supplied to the electric power reduction electrical component is not restricted when the applied voltage is not less than the first voltage value. This can conveniently prevent the electric power supplied to the electric power reduction electrical component from being reduced to excess.

In the teaching described above, it is preferred that a mode in which the dynamo supplies no electric power to the brake light, the turn indicator or the horn is defined as an unsteady electrical component power non-feed mode; and the controller is arranged, when the applied voltage is less than a first voltage value at the time of the idling state without the onboard rechargeable battery and the unsteady electrical component power feed mode, to reduce the electric power supplied to the electric power reduction electrical component to be less than at a time of the idling state without the onboard rechargeable battery and the unsteady electrical component power non-feed mode. According to the above, the controller can appropriately adjust the electric power supplied to the electrical components at the time of the idling state without the onboard rechargeable battery and the unsteady electrical component power non-feed mode, and also at the time of the idling state without the onboard rechargeable battery and the unsteady electrical component power feed mode.

In the teaching described above, it is preferred that the controller is arranged, when the applied voltage is within a predetermined range, to reduce the electric power supplied to the electric power reduction electrical component in response to a reduction in the applied voltage. According to the above, the electric power supplied to the starting device can be secured conveniently whether the amount of lowering of the applied voltage is large or small.

In the teaching described above, it is preferred that the predetermined range is, for example, a range equal to or less than the first voltage value. Further, the predetermined range, preferably, is equal to or less than the first voltage value, and equal to or more than a second voltage value lower than the first voltage value, for example.

In the teaching described above, it is preferred that the controller includes a voltage detector for detecting an applied voltage applied to the starting device, the electrical components and the controller; and an electric power adjuster for adjusting the electric power supplied to the electric power reduction electrical component based on the applied voltage detected by the voltage detector. The controller, with the voltage defector, can conveniently detect a transition to the unsteady electrical component power feed mode in the idling state without the onboard rechargeable battery. The electric power adjuster can therefore reduce the electric power supplied to the electric power reduction electrical component at an appropriate time.

In the teaching described above, it is preferred that the electric power adjuster is arranged to change an amount of reduction of the electric power supplied to the electric power reduction electrical component according to the applied voltage. According to this preferred aspect, the controller can meticulously adjust the electric power supplied to the electric power reduction electrical component. As a result, the electric power supplied to the electric power reduction electrical component can be prevented from being reduced to excess.

In the teaching described above, it is preferred that a maximum power consumption of the electric power reduction electrical component is larger than a maximum power consumption of any one of the brake light, the turn indicator and the horn. If such a relationship is maintained between the brake light, turn indicator and horn, and the electric power reduction electrical component, the controller can easily adjust the electric power supplied to the entire electrical components by adjusting the electric power supplied to the electric power reduction electrical component. As a result, the electric power supplied to the starting device can be secured easily even at the time of the idling state without the onboard rechargeable battery and the unsteady electrical component power feed mode.

In the teaching described above, it is preferred that the headlight is the electric power reduction electrical component. The headlight has a relatively large maximum power consumption among the electrical components. Since such headlight is the electric power reduction electrical component, the controller can easily adjust the electric power supplied to all the electrical components. As a result, the electric power supplied to the starting device can be secured easily even at the time of the idling state without the onboard rechargeable battery and the unsteady electrical component power feed mode.

In the teaching described above, it is preferred that the electric power generated by the dynamo when the engine is in the idling state is more than a first power consumption which is a sum of maximum power consumptions of the starting device, the headlight, the taillight and the controller, and is less than a second power consumption which is a sum of the smallest maximum power consumption among maximum power consumptions of the brake light, the turn indicator and the horn and the first power consumption. The output of the dynamo with the idling rotational frequency is equal to or more than the first power consumption and less than the second power consumption. In this case, the applied voltage conveniently reflects the transition to the unsteady electrical component power feed mode in the idling state without the onboard rechargeable battery, and the electric power load on the dynamo at that time. The controller can therefore appropriately determine timing of reducing the electric power supplied to the electric power reduction electrical component. Moreover, the controller can appropriately determine an amount of reduction of the electric power supplied to the electric power reduction electrical component.

In the teaching described above, it is preferred that the controller is arranged to allow no supply of electric power to the electric power reduction electrical component when starting the engine. According to this preferred aspect, the electric power supplied to the starting device can be secured advantageously when starting the engine. The engine can therefore be started properly.

In the teaching described above, it is preferred that the saddle riding type vehicle includes a rotational frequency sensor for detecting a rotational frequency of the engine; and the controller is arranged to acquire the rotational frequency based on a detection result of the rotational frequency sensor, and determine timing of starting supply of electric power to the electric power reduction electrical component based on the rotational frequency acquired. This construction can start the engine with increased propriety.

In the teaching described above, it is preferred that, when a state of the rotational frequency acquired being at least equal to a first threshold has continued for a predetermined period, the controller is arranged to start supplying electric power to the electric power reduction electrical component. This construction does not supply electric power to the electric power reduction electrical component until completion of starting of the engine. The engine can therefore be started with increased propriety.

In the teaching described above, it is preferred that, when the rotational frequency acquired is at least equal to a second threshold larger than the first threshold, the controller is arranged to start supplying electric power to the electric power reduction electrical component. According to this preferred aspect, when starting of the engine can be considered to have completed, electric power is promptly supplied to the electric power reduction electrical component. This can prevent an unnecessary prolongation of the period when no electric power is supplied to the electric power reduction electrical component.

This specification discloses also a teaching relating to the following saddle riding type vehicle.
(1) The saddle riding type vehicle as described above, wherein only the headlight is the electric power reduction electrical component.
   According to (1) above, since the taillight is not the electric power reduction electrical component, the control of the electric power reduction electrical component by the controller can be simplified.
(2) The saddle riding type vehicle as described above, wherein, where one of the headlight and the taillight is not the electric power reduction electrical component, the controller supplies electric power to the one of the headlight and the taillight when starting the engine.
   According to (2) above, of the headlight and the taillight, the electrical component which is not the electric power reduction electrical component can be operated promptly when starting the engine.
(3) The saddle riding type vehicle as described above wherein the electrical components include a meter lamp.
(4) The saddle riding type vehicle as described above, wherein the electrical components include a position light.
   According to (3) above, visibility of the meter can be improved. According to (4) above, the saddle riding type vehicle can be visually recognized easily from around the saddle riding type vehicle. That is, the conspicuity of the saddle riding type vehicle can be improved.
(5) The saddle riding type vehicle as described above, wherein the meter lamp is not the said electric power reduction electrical component.
(6) The saddle riding type vehicle as described above, wherein the position light is not the said electric power reduction electrical component.
   According to (5)/(6) above, since the meter lamp/position light is not the electric power reduction electrical component, the control of the electric power reduction electrical component by the controller can be simplified.
(7) The saddle riding type vehicle asdescribed above, wherein the controller supplies electric power to the meter lamp when starting the engine.
(8) The saddle riding type vehicle as described above, wherein the controller supplies electric power to the position light when starting the engine.
   According to (7)/(8) above, the meter lamp/position light can be operated promptly when starting the engine.
(9) The saddle riding type vehicle as described above, wherein, when the electric power produced by the dynamo is insufficient in a state of the rechargeable battery connected to the electric circuit, the rechargeable battery is arranged to compensate for insufficient electric power.
   According to the teaching set out in (9) above, when the rechargeable battery is connected to the electric circuit, the electric power supplied to the starting device can be secured with further increased effect. The electric power being insufficient means that the electric power loads (the starting device, electrical components and controller) of the dynamo exceed the output of the dynamo.
(10) The saddle riding type vehicle as described above, wherein: when the saddle riding type vehicle has no rechargeable battery, the saddle riding type vehicle is placed in the idling state without the onboard rechargeable battery by the engine operating in an idling state, and the dynamo supplying electric power to the starting device, the headlight, the taillight and the controller; and when the saddle riding type vehicle has the rechargeable battery, the saddle riding type vehicle is placed in the idling state without the onboard rechargeable battery by the rechargeable battery disconnected from the electric circuit, the engine operating in an idling state, and the dynamo supplying electric power to the starting device, the headlight, the taillight and the controller.
   According to the teaching set out in (10) above, the idling state without the onboard rechargeable battery can be realized whether or not the saddle riding type vehicle has the rechargeable battery.
(11) The saddle riding type vehicle as described above, wherein the controller is arranged further to control the fuel injection device and the ignition device.
   According to the teaching set out in (11) above, the controller can start the engine effectively.
(12) The saddle riding type vehicle as described above, wherein the maximum power consumption of the electric power reduction electrical component is larger than a sum of maximum power consumptions of the brake light, the turn indicator and the horn.

According to the teaching set out in (12) above, if such a relationship is maintained between the brake light, the turn indicator and the horn, and the electric power reduction electrical component, the controller can easily adjust the electric power supplied to all the electrical components by adjusting the electric power supplied to the electric power reduction electrical component. As a result, the electric power supplied to the starting device can be secured easily even at the time of the idling state without the onboard rechargeable battery and the unsteady electrical component power feed mode.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a left side view of a saddle riding type vehicle according to an embodiment;
Fig. 2 is a perspective view of a handlebar cover and a front cover seen from the rear and above;
Fig. 3 is a view showing a construction of an electrical system of the saddle riding type vehicle according to the embodiment;
Figs. 4A, 4B and 4C are views showing examples of control of a drive circuit based on duty ratios;
Fig. 5 is a view exemplifying a relationship between a system voltage and a duty ratio determined by a duty ratio determiner;
Fig. 6 is a view showing a relationship between engine rotational frequency and dynamo output;
Fig. 7 is a flow chart showing an example of operation of the saddle riding type vehicle;
Fig. 8A is a timing chart showing operation of a turn indicator, a horn and a brake light;
Fig. 8B is a timing chart showing variations in the duty ratio; and
Fig. 8C is a timing chart showing variations in the system voltage.

### DESCRIPTION OF THE PREFERRED EMBODIMENTS

A preferred embodiment of this invention will be described in detail hereinafter with reference to the drawings.

### 1. Construction of saddle riding type vehicle according to embodiment

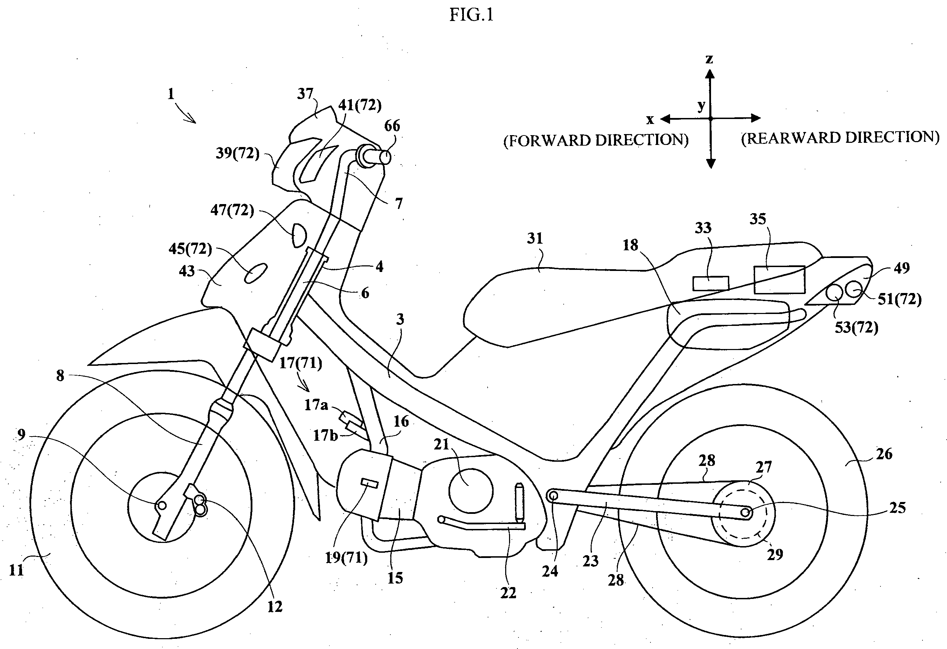

Fig. 1 is a left side view of a saddle riding type vehicle according to an embodiment. A saddle riding type vehicle 1 is a scooter type two-wheeled motor vehicle. In Fig. 1, x-direction, y-direction and z-direction represent the longitudinal direction, transverse direction and vertical direction of the saddle riding type vehicle 1, respectively. The saddle riding type vehicle 1 travels forward in one direction which is x-direction.

The saddle riding type vehicle 1 has a body frame 3. A head tube 4 is fixed to the front end of the body frame 3. The head tube 4 rotatably holds a steering shaft 6. A handlebar 7 is fixed to an upper part of the steering shaft 6. A front fork 8 is connected to a lower part of the steering shaft 6. The front fork 8 supports a front wheel axle 9. The front wheel axle 9 holds a front wheel 11. When the rider turns the handlebar 11, the steering shaft 6, front fork 8, axle 9 and front wheel 11 rotate relative to the head tube 4. The front wheel 11 is rotatable about the front wheel axle 9. A front wheel brake 12 is attached to the lower part of the front fork 8. The front wheel brake 12 brakes rotation of the front wheel 11 relative to the front wheel axle 9.

The body frame 3 supports an engine 15. The engine 15 is an internal combustion engine. The engine 15 has an intake pipe 16 connected thereto. A fuel injection device 17 is attached to the intake pipe 16. The fuel injection device 17 injects fuel into the engine 15. The fuel injection device 17 includes a fuel pump 17a and an injector 17b. The fuel pump 17a is connected to communicate with a fuel tank 18 for pressurizing fuel. The injector 17b is connected to communicate with the fuel pump 17a for injecting pressurized fuel into the intake pipe 16. The fuel injected by the fuel injection device 17 mixes with air supplied by the intake pipe 16 to become a fuel-air mixture. The fuel-air mixture is supplied into the engine 15 (specifically, into a combustion chamber, not shown, which is formed inside the engine 15).

The engine 15 has an ignition device 19 attached thereto. The ignition device 19 ignites the fuel-air mixture in the engine 15. When the fuel-air mixture burns in the engine 15, the engine 15 will generate power (specifically, a crankshaft (not shown) of the engine 15 will rotate).

The engine 15 has a dynamo 21 connected thereto. The dynamo 21 generates electricity with rotation of the engine 15. The engine 15 has a kick lever 22 connected thereto. When the kick lever 22 is kicked, the crankshaft will rotate to start the engine 15. The saddle riding type vehicle 1 may further include a starter motor (not shown) for generating power to rotate the crankshaft.

The body frame 3 supports a swing arm 23. The swing arm 23 is swingable about a pivot shaft 24 relative to the body frame 3. The swing arm 23 supports a rear wheel axle 25. The rear wheel axle 25 holds a rear wheel 26. The rear wheel 26 is rotatable about the rear wheel axle 25. A driven sprocket 27 is fixed to the rear wheel 26. A chain 28 is attached to the driven sprocket 27. The engine 15 rotates the rear wheel 26 through the chain 28. A rear wheel brake 29 is supported by the rear wheel axle 25. The rear wheel brake 29 brakes rotation of the rear wheel 26 relative to the rear wheel axle 25.

The body frame 3 supports a seat 31. The rider sits on the seat 31. An ECU (Engine Control Unit) 33 and a battery 35 are installed below the seat 31. The ECU 33 is an example of the controller in this invention. The battery 35 is an example of the rechargeable battery in this invention.

The handlebar 9 has a handlebar cover 37 attached thereto. The handlebar cover 37 has a headlight 39 and a turn indicator (also called "flasher") 41 installed on a front face thereof. The head tube 4 has a front cover 43 attached thereto. The front cover 43 has a position light (also called "marker lamp") 45 installed on a front face thereof. A horn 47 is installed inside the front cover 43.

A taillight unit 49 is installed rearward of the seat 31. The taillight unit 49 includes a taillight 51 and a brake light (also called "stoplight") 53.

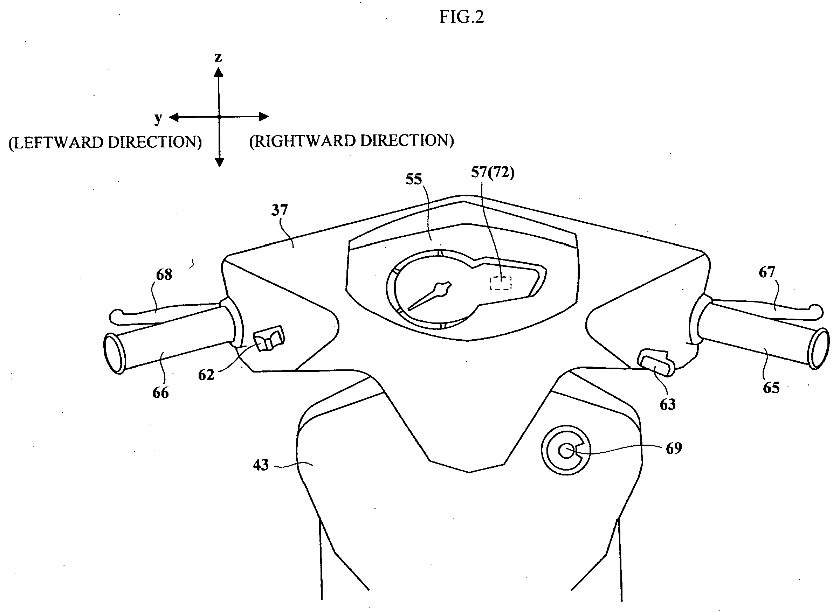

Fig. 2 is a perspective view of the handlebar cover 37 and front cover 43 seen from the rider seated on the seat 31. As shown in Fig. 2, one direction in the transverse direction y will be called the "rightward direction", and the other direction in the transverse direction y the "leftward direction".

The handlebar cover 37 has a meter 55 installed thereon. The meter 55 has a meter lamp 57. The handlebar cover 37 further includes, installed thereon, a turn indicator switch 62 for operating the turn indicator 41, and a horn switch 63 for operating the horn 47.

A right grip 65 is disposed rightward of the handlebar cover 37, and a left grip 66 leftward of the handlebar cover 37. The right grip 65 and left grip 66 are attached to opposite ends of the handlebar 9. The right grip 65 is what is called a throttle grip. In response to a control amount of the right grip 65, the intake pipe 16 supplies a varied amount of air (amount of air intake) to the engine 15, which varies the rotational frequency of the engine 15. The control amount of the right grip 65 will be called hereinafter the "control amount of the accelerator". A front brake lever 67 is disposed adjacent the right grip 65. The front brake lever 67 is operable to actuate the front wheel brake 12. A rear brake lever 68 is disposed adjacent the left grip 66. The rear brake lever 68 is operable to actuate the rear wheel brake 29.

The front cover 43 has a main switch 69 installed thereon. The main switch 69 is operated by a key inserted therein.

The fuel injection device 17 (fuel pump 17a and injector 17b) and the ignition device 19 are the devices for starting the engine 15, respectively, and these devices will be called herein the "starting device 71" as appropriate. The headlight 39, turn indicator 41, position light 45, horn 47, taillight 51, brake light 53 and meter lamp 57 will be called the "electrical components 72" as appropriate. The electrical components 72 do not include the starting device 71. The starting device 71 and electrical components 72 are operable by electric power, respectively.

Inventors herein have acquired the following findings as a result of research conducted on the electrical components.

Firstly, when the engine 15 is in an idling state, the headlight 39 and taillight 51 operate frequently, compared with the horn 47, turn indicator 41 and brake light 53. For example, the former electrical components 72 will operate automatically when the main switch 69 is turned on. On the other hand, the latter electrical components 72 will not operate automatically, respectively, even when the main switch 69 is turned on. Thus, from the viewpoint of operating situation in the idling state, the electrical components 72 are classified into two groups.

Here, the "idling state" means a state where the engine 15 is in operation (in rotation) when the control amount of the accelerator is zero.

In this specification, for expediency, the headlight 39 and taillight 51 in particular are called "steady electrical components 72a", and the horn 47, turn indicator 41 and brake light 53 "unsteady electrical components 72b". In this embodiment, the position light 45 and meter lamp 57 are regarded as steady electrical components 72a.

Secondly, the maximum power consumption of the headlight 39 is larger than the maximum power consumption of any one of the turn indicator 41, horn 47 and brake light 53. For example, the maximum power consumption of the headlight 39 is 35 [W], whereas the maximum power consumptions of the turn indicator 41, horn 47 and brake light 53 are 20 [W], 14 [W] and 21 [W], respectively.

Based on these findings, an electric system in this embodiment has a construction as described next.

### 2. Electrical system of saddle riding type vehicle according to embodiment

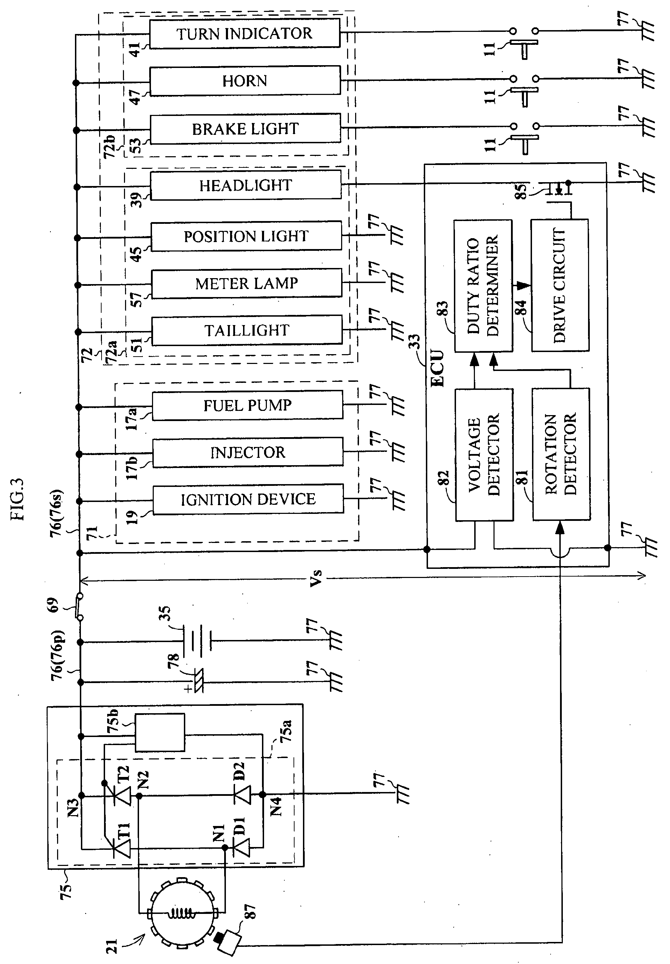

Fig. 3 is a view showing a construction of an electrical system of the saddle riding type vehicle according to the embodiment.

The dynamo 21 is a single-phase AC generator, for example. The dynamo 21 outputs single-phase AC power.

The dynamo 21 is electrically connected to a rectifier/voltage controller 75. The rectifier/voltage controller 75 converts dynamo output into DC power of a voltage not exceeding a predetermined value. The rectifier/voltage controller 75 outputs the DC power to power source wiring 76 and a ground circuit 77. The rectifier/voltage controller 75 is also called a regulator rectifier.

A construction of the rectifier/voltage controller 75 will be described by way of example. The rectifier/voltage controller 75 includes a rectifier circuit 75a and a voltage regulator circuit 75b.

The rectifier circuit 75a is a bridge circuit formed of two thyristors T1 and T2 and two diodes D1 and D2. The anode of thyristor T1 and the cathode of diode D1 are connected to a node N1. The anode of thyristor T2 and the cathode of diode D2 are connected to a node N2. Node N1 is connected to one output terminal of the dynamo 21. Node N2 is connected to the other output terminal of the dynamo 21. Each cathode of the thyristors T1 and T2 is connected to a node N3. Each anode of the diodes D1 and D2 is connected to a node N4. Node N3 is connected to the power source wiring 76. Node N4 is connected to the ground circuit 77.

The voltage of the power source wiring 76 with respect to the ground circuit 77 is called "system voltage Vs". The system voltage Vs is positive.

The voltage regulator circuit 75b detects the system voltage Vs. The voltage regulator circuit 75b drives the thyristors T1 and T2 based on detection results of the system voltage Vs. Consequently, the voltage regulator circuit 75b regulates the system voltage Vs so that the system voltage Vs will not exceed the predetermined value.

The power source wiring 76 and ground circuit 77 transmit the DC power converted by the rectifier/voltage controller 75.

The power source wiring 76 and ground circuit 77 are connected through a capacitor 78. The capacitor 78 smoothes the system voltage Vs. The capacitor 78 does not correspond to the rechargeable battery in this invention.

The battery 35 is connected in parallel with the capacitor 78 between the power source wiring 76 and ground circuit 77. The battery 35 stores electric power. When the electric power produced by the dynamo 21 is insufficient, the battery 35 compensates for the insufficient electric power.

The main switch 69 is mounted on the power source wiring 76. Here, a portion of the power source wiring 76 between the rectifier/voltage controller 75 (specifically, node N3) and the main switch 69 is called "primary wiring 76p". A portion of the power source wiring 76 on a secondary side of the main switch 69 is called "secondary wiring 76s". The capacitor 78 and battery 35 noted above are connected to the primary wiring 76p, respectively.

Between the secondary wiring 76s and ground circuit 77, the ECU 33, starting device 71 and electrical components 72 are connected in parallel with one another. Thus, the power source wiring 76 and ground circuit 77 electrically connect the dynamo 21 and ECU 33, electrically connect the dynamo 21 and starting device 71, and electrically connect the dynamo 21 and electrical components 72. The power source wiring 76 and ground circuit 77 are an example of the electric circuit in this invention.

The system voltage Vs is applied to the ECU 33, starting device 71 and electrical components 72, respectively. The system voltage Vs is an example of the applied voltage in this invention.

When the main switch 69 is in the OFF state, no electric power is supplied to the starting device 71, ECU 33 or electrical components 72.

A rotational frequency sensor 87 is connected to the ECU 33. The rotational frequency sensor 87 generates a detection signal corresponding to rotation of the dynamo 21, and outputs this detection signal to a rotation detector 81. The rotational frequency sensor 87 is a pickup coil, for example. The rotational frequency of the dynamo 21 corresponds to the rotational frequency of the engine 15, and therefore the rotational frequency sensor 87 is an example of sensor which detects the rotational frequency of the engine 15.

When the main switch 69 is turned to the ON state, electric power will be supplied to the ECU 33 to start the ECU 33. The ECU 33 includes the rotation detector 81, a voltage detector 82, a duty ratio determiner 83, a drive circuit 84 and a semiconductor switch 85.

The rotation detector 81 acquires a rotational frequency of the engine 15 based on the detection result (detection signal) of the rotational frequency sensor 87. The rotation detector 81 may acquire a rotational frequency of the engine 15 based on a detection signal of a crank angle sensor which detects a rotation angle of the crankshaft, instead of the rotational frequency sensor 87. The crank angle sensor is also an example of sensor which detects the rotational frequency of the engine 15.

The voltage detector 82 detects the system voltage Vs.

The duty ratio determiner 83 determines a duty ratio D based on the acquired engine rotational frequency and the detected system voltage Vs.

The drive circuit 84 drives the semiconductor switch 85 based on the duty ratio D.

The semiconductor switch 85 is a field effect transistor (FET), for example. The gate of the semiconductor switch 85 is connected to the drive circuit 84. The drive circuit 84 gives a trigger signal to the gate. The headlight 39 is connected between the source of the semiconductor switch 85 and the power source wiring 76. The drain of the semiconductor switch 85 is connected to the ground circuit 77.

The semiconductor switch 85 switches between ON state and OFF state in response to the trigger signal. The semiconductor switch 85, when in the ON state, is conductive between the source and the drain to apply the system voltage Vs to the headlight 39 and supply electric power to the headlight 39. The semiconductor switch 85, when in the OFF state, is nonconductive between the source and the drain, whereby the system voltage Vs is not applied to the headlight 39, and electric power is not supplied to the headlight 39.

The duty ratio determiner 83, drive circuit 84 and semiconductor switch 85 are an example of the electric power adjuster in this invention.

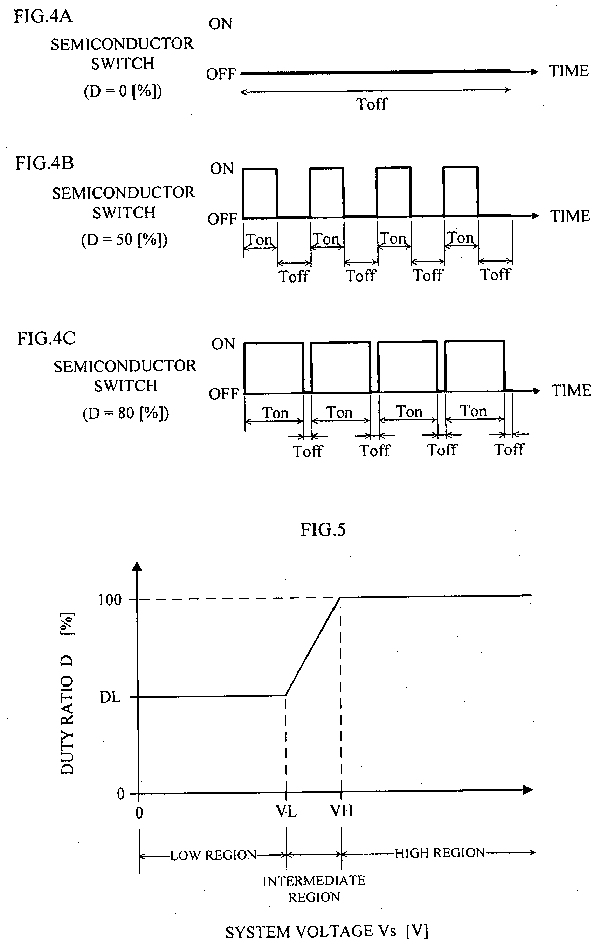

Figs. 4A, 4B and 4C are views showing examples of control of the drive circuit 84 based on the duty ratio D. Figs. 4A, 4B and 4C show operation of the semiconductor switch 85 when the duty ratio D is 0 [%], 50 [%] and 80 [%], respectively. In Figs. 4A, 4B and 4C, ON periods Ton denote periods when the semiconductor switch 85 is in the ON state, and OFF periods Toff denote periods when the semiconductor switch 85 is in the OFF state.

As shown in Fig. 4A, when the duty ratio D is 0%, the semiconductor switch 85 is maintained in the OFF state.

As shown in Fig. 4B, when the duty ratio D is 50%, the semiconductor switch 85 is switched alternately between ON state and OFF state. The ratio of the ON periods Ton to a sum of the ON periods Ton and OFF periods Toff is 50 [%] which is equal to the duty ratio D. Driving the semiconductor switch 85 to make the ratio of the ON periods Ton equal to the duty ratio D in this way is called herein the "duty control" as appropriate.

In Fig. 4C, the semiconductor switch 85 is driven on and off with the ratio of the ON periods Ton at 80 [%]. Note that when the duty ratio D is 100 [%], the semiconductor switch 85 is maintained in the ON state.

As will be clear from Figs. 4A, 4B and 4C, the electric power supplied to the headlight 39 is varied in response to the duty ratio D. When the duty ratio D is 100 [%], the electric power supplied to the headlight 39 will not be restricted. When the duty ratio D is less than 100 [%], the electric power supplied to the headlight 39 will be restricted. The electric power supplied to the headlight 39 becomes smaller as the duty ratio D becomes smaller. When the duty ratio D is 0 [%], no electric power will be supplied to the headlight 39.

The headlight 39 is an example of the electric power reduction electrical component in this invention.

Fig. 5 is a view exemplifying a relationship between the system voltage Vs and the duty ratio D determined by the duty ratio determiner 83.

As shown in Fig. 5, when the system voltage Vs is equal to or more than a high voltage value VH, the duty ratio D will be 100 [%]. When the system voltage Vs is less than the high voltage value VH, the duty ratio D will be less than 100 [%]. The high voltage value VH is 11 [V], for example.

The relationship between the system voltage Vs and the duty ratio D includes regions where the duty ratio D is constant even with variations in the system voltage Vs, and a region where the duty ratio D becomes smaller as the system voltage Vs becomes lower.

As noted above, the duty ratio D is constant at 100 [%] in a range where the system voltage Vs is equal to or more than the high voltage value VH (hereinafter called "high region").

In a range where the system voltage Vs is between the high voltage value VH and a low voltage value VL inclusive (hereinafter called "intermediate region"), the duty ratio D becomes smaller as the system voltage Vs becomes lower. The low voltage value VL is smaller than the high voltage value VH. When the system voltage Vs has the low voltage value VL, the duty ratio D is a low duty ratio DL. When the system voltage Vs is in the intermediate region, the duty ratio D lowers in proportion to lowering of the system voltage Vs. The low voltage value VL is 10 [V], for example. The low duty ratio DL is 50 [%], for example.

The duty ratio D is constant in a range where the system voltage Vs is equal to or less than the low voltage value VL (hereinafter called "low region"). When the system voltage Vs is in the low region, the duty ratio D is the low duty ratio DL.

The high voltage value VH is an example of the first voltage value in this invention. The low voltage value VL is an example of the second voltage value in this invention.

Each of the rotation detector 81, voltage detector 82, duty ratio determiner 83 and drive circuit 84 noted hereinbefore is realized by at least one of a central processing unit (CPU), a storage medium, and a circuit which is hardware. The storage medium has, stored beforehand therein, various information for determining the duty ratio D. The various information may be formulas for calculating the duty ratio D based on the system voltage Vs, or may be tables correlating the system voltage Vs and duty ratio D.

The starting device 71 will be in an operable state when the main switch 69 is turned to the ON state. The ECU 33 further controls timing of operation of the starting device 71 based on detection signals of the rotational frequency sensor 87 or detection results of the crank angle sensor not shown. When the starting device 71 operates, electric power is supplied to the starting device 71.

When the main switch 69 is turned to the ON state, the meter lamp 57, position light 45 and taillight 51 are turned on. That is, when the main switch 69 is in the ON state, electric power will be supplied to the meter lamp 57, position light 45 and taillight 51.

The turn indicator 41 is connected to the power source wiring 76 through a turn indicator relay 91. When the main switch 69 is in the ON state and the turn indicator switch 62 is operated, the contact of the turn indicator relay 91 is closed to supply electric power to the turn indicator 41. The horn 47 is connected to the power source wiring 76 through a horn relay 92. When the main switch 69 is in the ON state and the horn switch 63 is operated, the contact of the horn relay 92 is closed to supply electric power to the horn 47. The brake light 53 is connected to the power source wiring 76 through a brake light relay 93. When the main switch 69 is in the ON state and at least one of the front brake lever 67 and rear brake lever 68 is operated, the contact of the brake light relay 93 is closed to supply electric power to the brake light 53.

### 3. Example of setting of idling rotational frequency

Here, an example of setting of the idling rotational frequency will be explained. The idling rotational frequency is a rotational frequency of the engine 15 when the engine 15 is in an idling state.

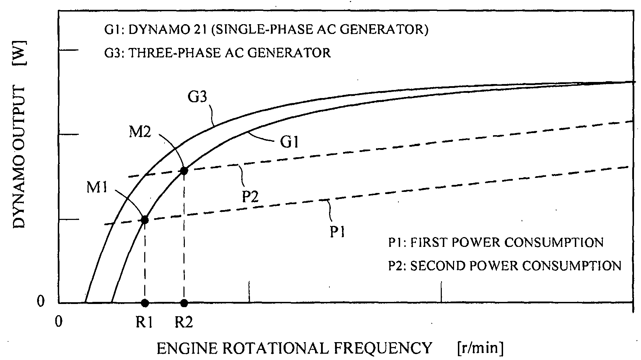

Fig. 6 is a view showing a relationship between rotational frequency [rpm] of the engine 15 and output [W] of the dynamo 21. In Fig. 6, line G1 represents the output of the dynamo 21 (single phase AC generator). As shown, the output of the dynamo 21 increases with an increase in the rotational frequency of the engine 15.

In this embodiment, the idling rotational frequency is set such that, when the engine 15 is in an idling state, the output of the dynamo 21 is equal to or more than a first power consumption, and smaller than a second power consumption. Here, the first power consumption is a sum (total value) of maximum power consumptions of the ECU 33, starting device 71 and steady electrical components 72a. The second power consumption is a sum of the smallest maximum power consumption among the maximum power consumptions of the respective members included in the unsteady electrical components 72b, and the first power consumption. The steady electrical components 72a are the headlight 39, position light 45 taillight 51 and meter lamp 57. The unsteady electrical components 72b are the horn 47, turn indicator 41 and brake light 53. Where, for example, the maximum power consumptions of the turn indicator 41, horn 47 and brake light 53 are 20 [W], 14 [W] and 21 [W], respectively, the above-mentioned "smallest maximum power consumption among the maximum power consumptions of the respective members included in the unsteady electrical components 72b" is 14 [W].

Fig. 6 further shows line P1 which represents the first power consumption and line P2 which represents the second power consumption. In Fig. 6, point M1 is an intersection of line G1 and line P1. Rotational frequency R1 is a rotational frequency of the engine 15 at point M1. Rotational frequency R1 is a rotational frequency of the engine 15 when the output of the dynamo 21 is equal to the first power consumption. Point M2 is an intersection of line G1 and line P2. Rotational frequency R2 is a rotational frequency of the engine 15 at point M2. Rotational frequency R2 is a rotational frequency of the engine 15 when the output of the dynamo 21 is equal to the second power consumption. An idling rotational frequency to be set is equal to or more than rotational frequency R1 and less than rotational frequency R2.

### 4. Operation of saddle riding type vehicle according to embodiment

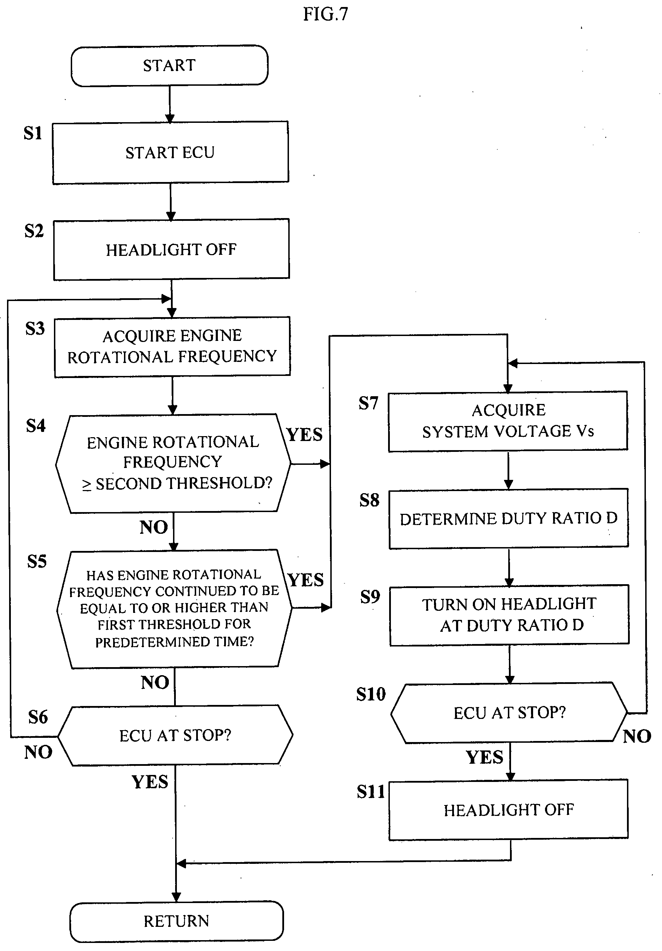

Next, an example of operation of the saddle riding type vehicle 1 will be described. Fig. 7 is a flow chart showing an example of operation of the saddle riding type vehicle 1. Description will be started on an assumption that the main switch 69 is in the OFF state and the engine 15 at a stop.

### <Step S1> Start ECU

The rider turns on the main switch 69. The main switch 69 closes the power source wiring 76. The ECU 33 starts and comes into the ON state. The starting device 71 becomes operable. The position light 45, taillight 51 and meter lamp 57 turn on, respectively.

### <Step S2> Headlight off

The headlight 39 is off when the ECU 33 starts.

For example, the duty ratio determiner 83 may set "0%" as an initial value of the duty ratio D. In this case, the drive circuit 84 carries out duty control of the semiconductor switch 85 based on the initial value of the duty ratio D. Or, for example, the duty ratio determiner 83 does not need to output the duty ratio D to the drive circuit 84. In this case, the drive circuit 84 does not carry out duty control of the semiconductor switch 85. In either case, the semiconductor switch 85 is maintained in the OFF state, and electric power is not supplied to the headlight 39.

### <Step S3> Acquire engine rotational frequency

The rotational frequency sensor 87 detects a rotational frequency of the dynamo 21. The rotation detector 81 acquires an engine rotational frequency.

### <Step S4> Is engine rotational frequency equal to or higher than second threshold?

The duty ratio determiner 83 determines whether the acquired engine rotational frequency is equal to or higher than a second threshold. The second threshold is higher than the idling rotational frequency. When the engine rotational frequency is found equal to or higher than the second threshold, the operation proceeds to step S5.

### <Step S5> Has engine rotational frequency continued to be equal to or higher than first threshold for predetermined time?

The duty ratio determiner 83 determines whether a state where the acquired engine rotational frequency is equal to or higher than a first threshold has continued for a predetermined time. The first threshold is lower than the second threshold. Preferably, the first threshold is equal to or less than the idling rotational frequency. When it is found that the state where the acquired engine rotational frequency is equal to or higher than the first threshold has continued for the predetermined time, the operation proceeds to step S7. Otherwise, the operation proceeds to step S6.

The above first threshold and second threshold are set beforehand to a storage medium provided for the ECU 33. When the idling rotational frequency is 1300 [rpm], the first threshold is 1000 [rpm], for example, and the second threshold is 1500 [rpm], for example. The predetermined time is 20 [msec], for example.

None of the conditions described in steps S4 and S5 are satisfied when the engine 15 is at a stop. On the other hand, after the engine 15 is started, at least certain of these conditions will be satisfied.

A method of starting the engine 15 will be described by way of example now. The rider kicks the kick lever 22. The kick lever 22 forcibly rotates the engine 15. When the engine 15 begins to rotate, the dynamo 21 will begin to generate electricity. The electric power of one or both of the dynamo 21 and battery 35 is supplied to the starting device 71. The starting device 71 operates under control of the ECU 33. Consequently, the engine 15 begins to rotate independently, without receiving the force of the kick lever 22.

Where the saddle riding type vehicle 1 has a starter motor, the rider may control a switch for operating the starter motor. In this case, the battery 35 supplies electric power to the starter motor (not shown) whereby the starter motor forcibly rotates the engine 15.

### <Step S6> ECU at stop?

When, for example, the rider turns of the main switch 69, the ECU 33 will stop. Even when the main switch 69 is in the ON state, the ECU 33 may accidentally stop operating. In such an unexpected situation, the ECU 33 will restart promptly. However, the ECU 33 is at a stop for a period after the ECU 33 stops operating until the restart. When the ECU 33 stops operating, a series of operations is terminated. On the other hand, if the ECU 33 is not at a stop, the operation will return to step S3.

### <Step S7> Acquire system voltage Vs

The voltage detector 82 detects the system voltage Vs.

### <Step S8> Determine duty ratio D

The duty ratio determiner 83 determines a duty ratio D based on the detected system voltage Vs. The duty ratio determiner 83 may calculate the duty ratio D using a formula stored in the storage medium. Or the duty ratio determiner 83 may determine the duty ratio D with reference to a table stored in the storage medium.

### <Step S9> Turn on headlight at duty ratio D

The drive circuit 84 carries out duty control of the semiconductor switch 85 based on the determined duty ratio D. The electric power corresponding to the duty ratio D is supplied to the headlight 39. The headlight 39 comes on.

Since the saddle riding type vehicle 1 has the battery 35, an insufficiency of the output of the dynamo 21 is compensated for. It will therefore hardly happen as long as each member such as the battery 35 is normal that the system voltage Vs falls below the high voltage value VH. It will also hardly happen that the electric power supplied to the headlight 39 is restricted.

### <Step S10> ECU at stop?

When the ECU 33 is at a stop, the operation proceeds to step S11. If the ECU 33 is not at a stop, the operation returns to step S7.

### <Step S11> Headlight off

When the ECU 33 is at a stop, the drive circuit 84 will also stop. The semiconductor switch 85 is maintained in the OFF state to supply no electric power to the headlight 39. The headlight 39 goes off.

### 5. Scene in which electric power supplied to headlight 39 reduces

A situation in which the ECU 33 reduces the electric power supplied to the headlight 39 will be described by way of example hereinafter.

First, the battery 35 is disconnected from the power source wiring 76 and ground circuit 77. The engine 15 is placed in an idling state. Confirmation is made that the steady electrical components 72a are in operation (that is, they are lighted).

Consequently, the saddle riding type vehicle 1 will be in a state satisfying (a), (b) and (c1) set out below (hereinafter called the "idling state without the onboard battery 35"). The "idling state without the onboard battery 35" is an example of the "idling state without the onboard rechargeable battery" in this invention.
(a) Engine 15 is operating in an idling state;
(b) Dynamo 21 is supplying electric power to the ECU 33, starting device 71 and steady electrical components 72a; and
(c1) Battery 35 is disconnected from the power source wiring 76 and ground circuit 77.

Next, in the idling state without the onboard battery 35, at least one of the unsteady electrical components 72b is operated. Then, the power load of the dynamo 21 will become equal to or more than the second power consumption, and will exceed the output of the dynamo 21. The system voltage Vs will lower. When the system voltage Vs becomes less than the high voltage value VH, the ECU 33 will determine the duty ratio D to have a value less than 100 [%], thereby restricting the electric power supplied to the headlight 39. This reduces the brightness of the headlight 39.

The state where the dynamo 21 is supplying electric power to the unsteady electrical components 72b (more particularly, the state where the dynamo 21 is supplying electric power to at least one of the turn indicator 41, horn 47 and brake light 53) is called herein the "power feed mode". The state where the dynamo 21 is not supplying electric power to the unsteady electrical components 72b (more particularly, the state where the dynamo 21 is supplying electric power to none of the turn indicator 41, horn 47 and brake light 53) is called herein the "power non-feed mode". The power feed mode is an example of the unsteady electrical component power feed mode in this invention. The power non-feed mode is an example of the unsteady electrical component power non-feed mode in this invention.

When the system voltage Vs is less than the high voltage value VH in the idling state. without the onboard battery 35 and the power feed mode, the ECU 33 reduces the electric power supplied to the headlight 39 to be smaller than at the time of the idling state without the onboard battery 35 and the power non-feed mode.

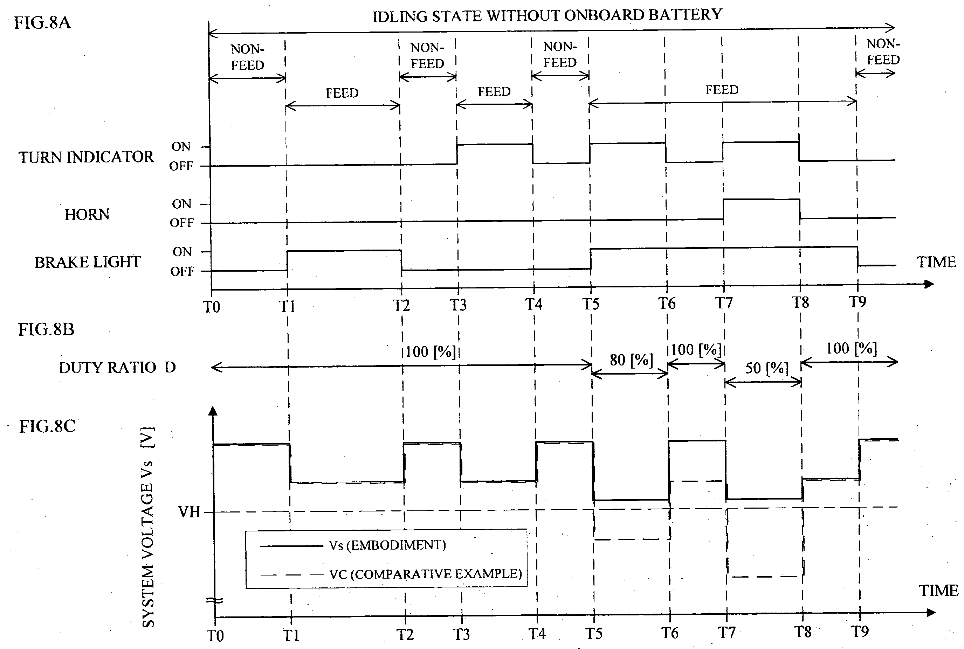

Figs. 8A, 8B and 8C are timing charts showing variations in the duty ratio D and system voltage Vs in the idling state without the onboard battery 35. Fig. 8A shows periods of operation of the turn indicator 41, horn 47 and brake light 53. Fig. 8B shows variations in the duty ratio D. Fig. 8C shows variations in the system voltage Vs. In Fig. 8C, the solid line represents the system voltage Vs in this embodiment. The dotted line represents a system voltage VC in a comparative example. The comparative example does not adjust (restrict) the electric power supplied to the headlight 39.

Reference is made to Fig. 8A. The saddle riding type vehicle 1 is in the idling state without the onboard battery 35 over the entire period. The turn indicator 41 operates during each period of time T3-T4, time T5-T6 and time T7-T8. The horn 47 operates during a period of time T7-T8. The brake light 53 operates during each period of time T1-T2 and time T5-T9. Therefore, the power feed mode is in place for the periods of time T1-T2, time T3-T4 and time T5-T9, respectively. The power non-feed mode is in place for the other periods.

Reference is made to Figs. 8B and 8C. When in the idling state without the onboard battery 35 and in the power non-feed mode, the system voltage Vs is equal to or more than the high voltage value VH, the duty ratio D is 100%, and the ECU 33 does not restrict the electric power supplied to the headlight 39. As a result, the system voltage Vs is substantially equal to the system voltage VC of the comparative example.

In each period of time T1-T2 and time T3-T4, the situation is the idling state without the onboard battery 35 and the power feed mode, and the system voltage Vs is equal to or higher than the high voltage value VH. Therefore, the duty ratio D is 100%, and the ECU 33 does not restrict the electric power supplied to the headlight 39. The system voltage Vs is substantially equal to the system voltage VC of the comparative example.

In each period of time T5-T6 and time T7-T8, the situation is the idling state without the onboard battery 35 and the power feed mode, and the system voltage Vs is less than the high voltage value VH. Therefore, the duty ratio D is less than 100%, and the ECU 33 restricts the electric power supplied to the headlight 39.

In Fig. 8C, in each period of time T5-T6 and time T7-T8, the solid line representing the system voltage Vs is drawn in the ranges equal to or higher than the high voltage value VH. This indicates that, with the reduction in the electric power supplied to the headlight 39, the system voltage Vs has recovered promptly from a value less than the high voltage value VH to a value equal to or higher than the high voltage value VH. As a result, the system voltage Vs is higher than the system voltage VC of the comparative example. Incidentally, the system voltage VC is less than the high voltage value VH.

The duty ratio D in the period of time T5-T6 and the duty ratio D in the period of time T7-T8 are different. This indicates that the ECU 33 changes the duty ratio D in response to the amount of lowering of the system voltage Vs. As a result, the amount of reduction of the electric power supplied to the headlight 39 changes in response to the amount of lowering of the system voltage Vs.

### 6. Effects of embodiment

When in the idling state without the onboard battery 35 and in the power feed mode, the ECU 33 adjusts the electric power supplied to the headlight 39 based on the system voltage Vs. Consequently, the electric power supplied to the electrical components 72 can be adjusted appropriately, and the electric power supplied to the starting device 71 can be secured appropriately. The engine 15 can therefore be maintained in the idling state optimally. Further, a relatively low idling rotational frequency can be set. Specifically, an idling rotational frequency lower than the engine rotational frequency R2 of the time when the output of the dynamo 21 is equal to the second power consumption can be set. Therefore, the fuel efficiency of the saddle riding type vehicle 1 can be improved conveniently.

According to this embodiment, even when the battery 35 is disconnected from the power source wiring 76 and ground circuit 77, the engine 15 can be maintained in an idling state optimally.

The ECU 33 adjusts the electric power supplied to the headlight 39 also at other times than when in the idling state without the onboard battery 35 and the power feed mode. For example, the ECU 33 adjusts the electric power supplied to the headlight 39 also when the battery 35 is connected to the power source wiring 76 and ground circuit 77. The ECU 33 adjusts the electric power supplied to the headlight 39 when, for example, the output of the dynamo 21 is insufficient and the battery 35 cannot compensate for the electric power shortage. The engine 15 can therefore be maintained in the idling state with increased reliability. Further, even when the battery 35 has deteriorated, the engine 15 can be maintained in the idling state reliably.

The ECU 33 adjusts the electric power supplied to the headlight 39 when the system voltage Vs is less than the high voltage value VH in the idling state without the onboard battery 35 and in the power feed mode. This can reduce the electric power supplied to the headlight 39 at appropriate times. The electric power supplied to the headlight 39 is not reduced when the system voltage Vs is equal to or higher than the high voltage value VH even in the idling state without the onboard battery 35 and the power feed mode. This can prevent the electric power supplied to the headlight 39 from becoming unnecessarily small.

When the system voltage Vs is less than the high voltage value VH in the idling state without the onboard battery 35 and the power feed mode, the ECU 33 reduces the electric power supplied to the headlight 39 to be smaller than at the time of the idling state without the onboard battery 35 and the power non-feed mode. This can prevent an increase to excess of the electric power supplied to the electrical components 72 in the idling state without the onboard battery 35 and the power feed mode. Further, increased electric power can be supplied to the headlight 39 at the time of the idling state without the onboard battery 35 and the power non-feed mode.

In particular, the electric power generated by the dynamo 21 when the engine 15 is in an idling state is equal to or more than the first power consumption and is less than the second power consumption. In the idling state without the onboard battery 35, therefore, the system voltage Vs lowers easily when a transition is made from the power non-feed mode to the power feed mode. In the idling state without the onboard battery 35 and the power feed mode, the system voltage Vs is easily variable with variations in the electric power supplied to the electrical components 72. The ECU 33 can therefore appropriately determine timing of reducing the electric power supplied to the headlight 39. Moreover, the ECU 33 can appropriately determine an amount of reduction of the electric power supplied to the headlight 39.

The maximum power consumption of the headlight 39 is larger than the maximum power consumption of any one of the unsteady electrical components 72b. The ECU 33 can therefore easily adjust the electric power supplied to the electrical components 72 by adjusting the electric power supplied to the headlight 39. As a result, even when in the idling state without the onboard battery 35 and the power feed mode, the electric power supplied to the starting device 71 can be secured easily.

The ECU 33, with the voltage detector 82, can detect the system voltage Vs conveniently. Consequently, the ECU 33 can control the electric power supplied to the headlight 39 at appropriate times.

Since the duty ratio determiner 83, drive circuit 84 and semiconductor switch 85 perform the duty control, the electric power supplied to the headlight 39 can be adjusted meticulously. In other words, the amount of reduction of the electric power supplied to the headlight 39 can be changed flexibly.

When the system voltage Vs is in the intermediate region, as the system voltage Vs becomes lower, the duty ratio D becomes smaller and the electric power supplied to the headlight 39 becomes smaller. Thus, the amount of reduction of the electric power supplied to the headlight 39 can be changed appropriately according to the amount of lowering of the system voltage Vs.

In the example of operation in this embodiment, the headlight 39 is in the OFF state when the ECU 33 is started (step S2). That is, when the ECU 33 starts, an unlit mode is started. The unlit mode is continued until completion of starting of the engine 15. That is, when the engine 15 starts, the ECU 33 does not allow supply of electric power to the headlight 39. Consequently, the ECU 33 can effectively secure the electric power supplied to the starting device 71. The engine 15 can therefore be started reliably.

The example of operation in this embodiment turns on the headlight 39 in step S9. The state where the headlight 39 is on is called the "lighting mode". The ECU 33 determines the timing of transition from the unlit mode to the lighting mode based on the engine rotational frequency (steps S4 and S5). The ECU 33 can therefore start supplying electric power to the headlight 39 at an appropriate time.

Specifically, when the engine rotational frequency is equal to or higher than the first threshold, a transition is made to the lighting mode. This can turn on the headlight 39 promptly.

When a state where the engine rotational frequency is equal to or higher than the second threshold has continued for a predetermined time, a transition is made to the lighting mode. This can reliably prevent a supply of electric power to the headlight 39 before completion of starting of the engine 15.

The dynamo 21 is a single-phase generator which is less expensive than a three-phase generator. Incidentally, as shown in Fig. 6, particularly when the rotational frequency of the engine 15 is low, the electric power generated by a single-phase generator is less than that generated by a three-phase generator. It is therefore difficult to set a low idling rotational frequency when the dynamo is a single-phase generator, compared with when the dynamo is a three-phase generator. According to this embodiment, however, the idling rotational frequency can be set relatively low as noted hereinbefore, and this can diminish the disadvantageous characteristic of the single-phase generator.

The fuel injection device 17 includes the fuel pump 17a and injector 17b. The fuel injection device 17 consumes more electric power than a carburetor. The fuel injection device 17 therefore has a disadvantageous characteristic of making it difficult to set a low idling rotational frequency, compared with the case of a carburetor. In this embodiment, however, the idling rotational frequency can be set relatively low as noted hereinbefore, and this can diminish the disadvantageous characteristic of the fuel injection device 17.

The rectifier/voltage controller 75 outputs DC power of a single channel (single line). That is, the rectifier/voltage controller 75 does not have a circuit for outputting DC power of two or more channels. Thus, the rectifier/voltage controller 75 can be realized with a simple circuit at low cost.

This invention is not limited to the foregoing embodiment, but may be modified as follows:
(1) In the foregoing embodiment, the saddle riding type vehicle 1 has the battery 35, but this is not limitative. That is, the saddle riding type vehicle 1 does not need to have the battery 35. The saddle riding type vehicle 1 may be what is called the battery-less type. In this case, without doing anything, the condition (c1) for the idling state without the onboard battery 35 is satisfied.
(2) The foregoing embodiment describes the state of satisfying (a), (b) and (c1) above as an example of the idling state without the onboard battery 35, but this is not limitative. The idling state without the onboard battery 35 may, for example, be a state of satisfying conditions (a), (b) and (c2) below. Conditions (a) and (b) are the same as in the embodiment.
   (a) Engine 15 is operating in an idling state;
   (b) Dynamo 21 is supplying electric power to the ECU 33, starting device 71 and steady electrical components 72a; and
   (c2) Battery 35 is connected to the power source wiring 76 and ground circuit 77, but the battery 35 has no storage function.

   Regarding (c2) above, when the battery 35 has no storage function, it means a state where the battery 35 cannot be charged with a charging device. In other words, when the battery 35 has no storage function, it means that the battery 35 has lost a function to store electric power. Here, the charging device is provided for the saddle riding type vehicle 1, for example. The charging device is formed of the dynamo 21, rectifier/voltage controller 75, power source wiring 76, ground circuit 77 and capacitor 78, for example.
   The state of satisfying (a), (b) and (c2) shown in this modification is equivalent to the state of satisfying (a), (b) and (c1) shown in the embodiment. Therefore, even when the state of satisfying (a), (b) and (c2) is regarded as idling state without the onboard battery 35, the situation of the ECU 33 reducing the electric power supplied to the headlight 39 can be produced conveniently.
(3) In the foregoing embodiment, the ECU 33 can vary the electric power supplied to the headlight 39 by duty control, but this is not limitative. For example, the headlight 39 may have a plurality of head lamps, and the ECU33 may change the number of head lamps to turn on. This can conveniently vary the electric power supplied to the headlight 39.
(4) The steady electrical components 72a, as long as the headlight 39 and taillight 51 are included, can be changed as appropriate: The steady electrical components 72a may also include at least one of the position light 45 and meter lamp 57, or does not need to include either. Or the steady electrical components 72a may include, in addition to the headlight 39 and taillight 51, other electrical components (however, except for the horn 47, turn indicator 41 and brake light 53).
(5) The unsteady electrical components 72b, as long as the horn 47, turn indicator 41 and brake light 53 are included, can be changed as appropriate. As in the foregoing embodiment, the unsteady electrical components 72b may only be the horn 47, turn indicator 41 and brake light 53. Or the unsteady electrical components 72b may include, in addition to the horn 47, turn indicator 41 and brake light 53, other electrical components (however, except for the headlight 39 and taillight 51). The other electrical components may be at least one of the position light 45 and meter lamp 57.
   As to which of the steady electrical components 72a and unsteady electrical components 72b should include the above-noted other electrical components, an appropriate selection can be made by taking into consideration, besides use frequency, hour or time zone of use of the other electrical components, and laws/rules relating to the other electrical components.
(6) In the foregoing embodiment, the headlight 39 has been described as an example of the electric power reduction electrical components, but this is not limitative. For example, at least one of the headlight 39 and taillight 51 may be made an electric power reduction electrical component. Or at least one of the steady electrical components 72a may be made an electric power reduction electrical component.
(7) The foregoing embodiment exemplifies the case where the maximum power consumption of the headlight 39 is larger than the maximum power consumption of any one of the turn indicator 41, horn 47 and brake light 53, but this is not limitative. When the headlight 39 and taillight 51 are treated as electric power reduction electrical components, for example, the maximum power consumption of the electric power reduction electrical components is a sum of the maximum power consumptions of the headlight 39 and taillight 51. It will serve the purpose if the maximum power consumption of these electric power reduction electrical components is larger than the maximum power consumption of any one of the turn indicator 41, horn 47 and brake light 53.
   It is preferred that the maximum power consumption of the electric power reduction electrical component is larger than the maximum power consumption of the unsteady electrical components 72b (e.g. a sum of the maximum power consumptions of the turn indicator 41, horn 47 and brake light 53). This arrangement can inhibit, with increased ease, an increase in the electric power supplied to the electrical components 72 even when the power feed mode becomes operative in the idling state without the onboard battery 35.
(8) In the foregoing embodiment, the saddle riding type vehicle 1 has the position light 45, but this is not limitative. That is, the saddle riding type vehicle 1 does not need to have the position light 45. The saddle riding type vehicle 1 has the meter lamp 57, but this is not limitative. That is, the saddle riding type vehicle 1 does not need to have the meter lamp 57.
(9) In the foregoing embodiment, the ECU 33 controls the electric power supplied to the headlight 39, and also controls the starting device 71, but this is not limitative. For example, the saddle riding type vehicle 1 may have a control unit provided separately from the ECU 33, and this control unit may control the electric power supplied to the headlight 39. In this modification, the control unit does not need to control the starting device 71.
(10) The saddle riding type vehicle 1 may be a vehicle driven by a rider straddling the seat 31, or may be a vehicle (e.g. a scooter type vehicle) driven by a rider whose legs are kept close together.
(11) In the foregoing embodiment, the saddle riding type vehicle 1 is a two-wheeled motor vehicle having one front wheel 11 and one rear wheel 26, but this is not limitative. For example, the saddle riding type vehicle 1 may be a three-wheeled motor vehicle having two front wheels 11 and one rear wheel 26, or may be a three-wheeled motor vehicle having one front wheel 11 and two rear wheels 26. Or the saddle riding type vehicle 1 may be a four-wheeled motor vehicle having two front wheels 11 and two rear wheels 26.
(12) The foregoing embodiment and each of the modified embodiments described in (1) to (11) above may be further varied as appropriate by replacing or combining each component with a component of another modified embodiment.

This invention may be embodied in other specific forms. Accordingly, reference should be made to the appended claims, rather than to the foregoing specification, as indicating the scope of the invention.

## Claims

1. A saddle riding type vehicle (1) comprising:
an engine (15);
a dynamo (21) for generating electric power by rotation of the engine (15);
a starting device (71) for starting the engine (15);
a plurality of electrical components (72) excluding the starting device (71);
a controller (33) for controlling supply of electric power to the electrical components (72); and
an electric circuit (76, 77) for electrically connecting the dynamo (21) and the starting device (71), the dynamo (21) and the electrical components (72), and the dynamo (21) and the controller (33), respectively;
wherein the starting device (71) includes:
a fuel injection device (17) for injecting fuel into the engine (15); and
an ignition device (19) for igniting a fuel-air mixture in the engine (15);
the electrical components (72) include:
a headlight (39);
a taillight (51);
a brake light (53);
a turn indicator (41); and
a horn (47);
at least one of the headlight (39) and the taillight (51) is an electric power reduction electrical component with electric power supplied thereto being adjusted by the controller (33);
a state where the engine (15) is in an idling state, the dynamo (21) supplies electric power to the starting device (71), the headlight (39), the taillight (51) and the controller (33), and the rechargeable battery (35) is disconnected from the electric circuit (76, 77) or is connected to the electric circuit (76, 77) but has no electric storage function is defined as an idling state without an onboard rechargeable battery (35);
a mode in which the dynamo (21) supplies electric power to at least one of the brake light (53), the turn indicator (41) and the horn (47) is defined as an unsteady electrical component power feed mode; and
the controller (33) is arranged to adjust the electric power supplied to the electric power reduction electrical component at a time of the idling state without the onboard rechargeable battery (35) and the unsteady electrical component power feed mode, based on an applied voltage (Vs) applied to the starting device (71), the electrical components (72) and the controller (33).

2. The saddle riding type vehicle (1) according to claim 1, wherein the controller (33) is arranged to restrict the electric power supplied to the electric power reduction electrical component when the applied voltage (Vs) is less than a first voltage value (VH) at the time of the idling state without the onboard rechargeable battery (35) and the unsteady electrical component power feed mode.

3. The saddle riding type vehicle (1) according to claim 1 or 2, wherein:
a mode in which the dynamo (21) supplies no electric power to the brake light (53), the turn indicator (41) or the horn (47) is defined as an unsteady electrical component power non-feed mode; and
the controller (33) is arranged, when the applied voltage (Vs) is less than a first voltage value (VH) at the time of the idling state without the onboard rechargeable battery (35) and the unsteady electrical component power feed mode, to reduce the electric power supplied to the electric power reduction electrical component to be less than at a time of the idling state without the onboard rechargeable battery (35) and the unsteady electrical component power non-feed mode.

4. The saddle riding type vehicle (1) according to any one of claims 1 to 3, wherein the controller (33) is arranged, when the applied voltage (Vs) is within a predetermined range, to reduce the electric power supplied to the electric power reduction electrical component in response to a reduction in the applied voltage (Vs).

5. The saddle riding type vehicle (1) according to any one of claims 1 to 4, wherein the controller (33) includes:
a voltage detector (82) for detecting an applied voltage (Vs) applied to the starting device (71), the electrical components (72) and the controller (33); and
an electric power adjuster (83, 84, 85) for adjusting the electric power supplied to the electric power reduction electrical component based on the applied voltage (Vs) detected by the voltage detector (82).

6. The saddle riding type vehicle (1) according to claim 5, wherein the electric power adjuster (83, 84, 85) is arranged to change an amount of reduction of the electric power supplied to the electric power reduction electrical component according to the applied voltage (Vs).

7. The saddle riding type vehicle (1) according to any one of claims 1 to 6, wherein a maximum power consumption of the electric power reduction electrical component is larger than a maximum power consumption of any one of the brake light (53), the turn indicator (41) and the horn (47).

8. The saddle riding type vehicle (1) according to any one of claims 1 to 7, wherein the headlight (39) is the electric power reduction electrical component.

9. The saddle riding type vehicle (1) according to any one of claims 1 to 8, wherein the electric power generated by the dynamo (21) when the engine (15) is in the idling state is more than a first power consumption (P1) which is a sum of maximum power consumptions of the starting device (71), the headlight (39), the taillight (51) and the controller (33), and is less than a second power consumption (P2) which is a sum of the smallest maximum power consumption among maximum power consumptions of the brake light (53), the turn indicator (41) and the horn (47) and the first power consumption (P1).

10. The saddle riding type vehicle (1) according to any one of claims 1 to 9, wherein the controller (33) is arranged to allow no supply of electric power to the electric power reduction electrical component when starting the engine (15).

11. The saddle riding type vehicle (1) according to any one of claims 1 to 10, wherein:
the saddle riding type vehicle (1) includes a rotational frequency sensor (87) for detecting a rotational frequency of the engine (15); and
the controller (33) is arranged to acquire the rotational frequency based on a detection result of the rotational frequency sensor (87), and determine timing of starting supply of electric power to the electric power reduction electrical component based on the rotational frequency acquired.

12. The saddle riding type vehicle (1) according to claim 11, wherein, when a state of the rotational frequency acquired being at least equal to a first threshold has continued for a predetermined period, the controller (33) is arranged to start supplying electric power to the electric power reduction electrical component.

13. The saddle riding type vehicle (1) according to claim 11 or 12, wherein, when the rotational frequency acquired is at least equal to a second threshold larger than the first threshold, the controller (33) is arranged to start supplying electric power to the electric power reduction electrical component.

## Patentansprüche

1. Ein Sattelfahrzeugtyp (1) aufweisend:
ein Motor (15),
ein Dynamo (21) zum Generieren von elektrischer Energie durch Drehen des Motors (15),
eine Startvorrichtung (71) zum Starten des Motors (15),
eine Vielzahl von elektrischen Komponenten (72) exklusive der Startvorrichtung (71),
ein Controller (33) zum Steuern der Zufuhr von elektrischer Energie zu den elektrischen Komponenten (72), und
einen elektrischen Schaltkreis (76, 77) zum elektrischen Verbinden des Dynamos (21) und der Startvorrichtung (71), des Dynamos und der elektrischen Komponenten (72) und des Dynamos (21) und des Controllers (33), entsprechend,
wobei die Startvorrichtung (71) beinhaltet:
eine Kraftstoffeinspritzvorrichtung (17) zum Einspritzen von Kraftstoff in den Motor (15), und eine Zündvorrichtung (19) zum Zünden eines Kraftstoffluftgemisches in dem Motor (15),
die elektrischen Komponenten (72) beinhalten:
ein Vorderlicht (39), ein Rücklicht (51), ein Bremslicht (53), ein Blinklicht (41), und eine Hupe (47),
das Vorderlicht (39) und/oder das Rücklicht (51) sind Elektrizitätskraftverringerungselektrikkomponenten bei denen gelieferte elektrische Energie durch den Controller (33) justiert wird,
bei einem Zustand, bei dem der Motor (15) in einem Leerlauf ist, liefert der Dynamo (21) elektrische Energie zu der Startvorrichtung (71), dem Vorderlicht (39), dem Rücklicht (51) und dem Controller (33), und die wiederaufladbare Batterie (35) wird von dem elektrischen Schaltkreis (76, 77) getrennt oder mit dem elektrischen Schaltkreis (76, 77) verbunden aber diese hat keine elektrische Speicherfunktion und dies wird als ein Leerlauf ohne eine fahrzeugeigene wiederaufladbare Batterie (35) definiert,
ein Modus bei dem der Dynamo (21) elektrische Energie zu zumindest einem: dem Bremslicht (53), dem Blinklicht (41) und der Hupe (47) liefert wird als ein unbeständiger elektrischer Komponentenstromzuführmodus definiert, und
der Controller (33) ist angeordnet um die zu der Elektrizitätskraftverringerungselektrikkomponente gelieferte elektrische Energie zu einem Zeitpunkt zu justieren, bei dem der Leerlauf ohne die fahrzeugeigene wiederaufladbare Batterie (35) und dem unbeständigen elektrischen Komponentenstromzuführmodus stattfindet, basierend auf einer angewendeten Spannung (Vs), die an der Startvorrichtung (71), den elektrischen Komponenten (72) und dem Controller (33) angewendet wird.

2. Der Sattelfahrzeugtyp (1) gemäß Anspruch 1, wobei der Controller (33) angeordnet ist, um die zu der Elektrizitätskraftverringerungselektrikkomponente gelieferte elektrische Energie zu restriktieren, wenn die angewendete Spannung geringer ist als ein erster Spannungswert (VH) zu der Zeit im Leerlauf ohne die fahrzeugeigene wiederaufladbare Batterie (35) und dem unbeständigen elektrischen Komponentenstromzuführmodus.

3. Der Sattelfahrzeugtyp (1) gemäß Anspruch 1 oder 2, wobei:
ein Modus, bei dem der Dynamo (21) keine elektrische Energie zu dem Bremslicht (53), dem Blinklicht (41) oder der Hupe (47) liefert als ein unbeständiger elektrischer Komponentenstromnichtzuführmodus definiert wird, und
der Controller (33) angeordnet ist, wenn die angewendete Spannung (Vs) kleiner ist als ein erster Spannungswert (VH) zu dem Zeitpunkt im Leerlauf ohne die fahrzeugeigene wiederaufladbare Batterie (35) und dem unbeständigen elektrischen Komponentenzuführmodus um die zu der Elektrizitätskraftverringerungselektrikkomponente gelieferte elektrische Energie zu verringern um geringer zu sein als zu einem Zeitpunkt im Leerlauf ohne die fahrzeugeigene wiederaufladbare Batterie (35) und dem unbeständigen elektrischen Komponentenstromnichtzuführmodus.

4. Der Sattelfahrzeugtyp (1) gemäß einem der Ansprüche 1 bis 3, wobei der Controller (33) angeordnet ist, sodass wenn die angewendete Spannung (Vs) innerhalb eines vorbestimmten Bereiches ist, die zu der Elektrizitätskraftverringerungselektrikkomponente gelieferte Energie reduziert wird, in Antwort auf eine Reduktion der angewendeten Spannung (Vs).

5. Der Sattelfahrzeugtyp (1) gemäß einem der Ansprüche 1 bis 4, wobei der Controller (33) beinhaltet:
einen Spannungsdetektor (82) zum Detektieren einer angewendeten Spannung (VS) die an der Startvorrichtung (71), den elektrischen Komponenten (72) und dem Controller (33) angewendet wird, und einen Elektrizitätskraftjustierer (83, 84, 85) zum Justieren der zu der Elektrizitätskraftverringerungselektrikkomponente gelieferten elektrischen Energie basierend auf der angewendeten Spannung (Vs), die von dem Spannungsdetektor (82) detektiert wird.

6. Der Sattelfahrzeugtyp (1) gemäß Anspruch 5, wobei der Elektrizitätskraftjustierer (83, 84, 85) angeordnet ist, um eine Menge der Reduktion von elektrischer Energie zu ändern, die zu der Elektrizitätskraftverringerungselektrikkomponente entsprechend der angewendeten Spannung (Vs) geliefert wird.

7. Der Sattelfahrzeugtyp (1) gemäß einem der Ansprüche 1 bis 6, wobei ein maximaler Energieverbrauch der Elektrizitätskraftverringerungselektrikkomponente größer ist als ein maximaler Energieverbrauch von dem Bremslicht (53), dem Blinker (51) oder der Hupe (47).

8. Der Sattelfahrzeugtyp (1) gemäß einem der Ansprüche 1 bis 7, wobei das Vorderlicht (39) die Elektrizitätskraftverringerungselektrikkomponente ist.

9. Der Sattelfahrzeugtyp (1) gemäß einem der Ansprüche 1 bis 8, wobei die von dem Dynamo (21) generierte Elektrizität wenn der Motor (15) im Leerlauf ist, mehr ist, als ein erster Energieverbrauch (P1), der die Summe darstellt von maximalem Energieverbrauch der Startvorrichtung (71), des Vorderlichts (39), des Rücklichts (51) und des Controllers (33), und kleiner ist als ein zweiter Energieverbrauch (P2), der eine Summe des geringsten maximalen Energieverbrauchs von maximalen Energieverbräuchen des Bremslichts (53), des Blinkers (41) und der Hupe (47) und des ersten Energieverbrauchs (P1) ist.

10. Der Sattelfahrzeugtyp (1) gemäß einem der Ansprüche 1 bis 9, wobei der Controller (33) angeordnet ist und gestattet dass keine Elektrizität zu der Elektrizitätskraftverringerungselektrikkomponente geliefert wird wenn der Motor (15) gestartet wird.

11. Der Sattelfahrzeugtyp (1) gemäß einem der Ansprüche 1 bis 10, wobei der Sattelfahrzeugtyp (1) einen Rotationsfrequenzsensor (87) zum Detektieren einer Rotationsfrequenz des Motors (15) beinhaltet und der Controller (13) angeordnet ist, um die Rotationsfrequenz zu erhalten, basierend auf einem Detektionsresultat des Rotationsfrequenzsensors (87), und einen Zeitpunkt des Startens der Zufuhr von elektrischer Energie zu der Elektrizitätskraftverringerungselektrikkomponente bestimmten kann basierend auf der erhaltenen Rotationsfrequenz.

12. Der Sattelfahrzeugtyp (1) gemäß Anspruch 11, wobei wenn in einem Zustand bei dem die erlangte Rotationsfrequenz zumindest mit einer ersten Schwelle gleich ist und eine bestimmte Zeitdauer angehalten hat, der Controller (33) angeordnet ist um die Zufuhr von elektrischer Energie zu der Elektrizitätskraftverringerungselektrikkomponente zu starten.

13. Der Sattelfahrzeugtyp (1) gemäß einem der Ansprüche 11 oder 12, wobei wenn die erlangte Rotationsfrequenz zumindest gleich einer zweiten Schwelle ist, die größer ist, als die erste Schwelle, der Controller (33) die Zufuhr von elektrischer Energie zu der Elektrizitätskraftverringerungselektrikkomponente startet.

## Revendications

1. Véhicule à selle (1) comprenant :
un moteur (15) ;
une dynamo (21) pour générer de la puissance électrique par rotation du moteur (15) ;
un dispositif de démarrage (71) pour démarrer le moteur (15) :
une pluralité de composants électriques (72) excluant le dispositif de démarrage (71) ;
un régulateur (33) pour contrôler l'apport de puissance électrique aux composants électriques (72) ;
et
un circuit électrique (76, 77) pour connecter électriquement la dynamo (21) et le dispositif de démarrage (71), la dynamo (21) et les composants électriques (72), et la dynamo (21) et le régulateur (33), respectivement ;
où le dispositif de démarrage (71) inclut :
un dispositif d'injection de carburant (17) pour injecter le carburant dans le moteur (15) ; et
un dispositif d'allumage (19) pour enflammer le mélange carburant-air dans le moteur (15) ;
les composants électriques (72) incluent :
un feu avant (39) ;
un feu arrière (51) ;
un feu stop (53) ;
des clignotants (41) ; et
un avertisseur sonore (47) ;
au moins un des feux que sont le feu avant (39) et le feu arrière (51) est un composant électrique de réduction de puissance électrique dont la puissance électrique fournie est ajustée par le régulateur (33) ;
un état, dans lequel le moteur (15) est dans un état de marche au ralenti, la dynamo (21) fournit de la puissance électrique au dispositif de démarrage (71), au feu avant (39), au feu arrière (51) et au régulateur (33), et la batterie rechargeable (35) est déconnectée du circuit électrique (76, 77) ou est connectée au circuit électrique (76, 77) mais ne remplit pas sa fonction de stockage électrique, est défini comme un état de marche au ralenti sans batterie rechargeable embarquée (35) ;
un mode dans lequel la dynamo (21) fournit de la puissance électrique à au moins un des équipements que sont le feu stop (53), les clignotants (41), et l'avertisseur sonore (47) est défini comme un mode d'alimentation de composant électrique instable ; et
le régulateur (33) est agencé de façon à ajuster la puissance électrique fournie au composant électrique de réduction de puissance électrique en période d'état de marche au ralenti sans batterie rechargeable embarquée (35) et de mode d'alimentation de composant électrique instable, à partir d'une tension appliquée (Vs) au dispositif de démarrage (71), aux composants électriques (72) et au régulateur (33).

2. Véhicule à selle (1) selon la revendication 1, où le régulateur (33) est agencé de façon à restreindre la puissance électrique fournie au composant électrique de réduction de puissance électrique quand la tension appliquée (Vs) est inférieure à la première valeur de tension (VH), en période d'état de marche au ralenti sans batterie rechargeable embarquée (35) et de mode d'alimentation de composant électrique instable.

3. Véhicule à selle (1) selon la revendication 1 ou 2, où :
un mode dans lequel la dynamo (21) ne fournit pas de puissance électrique au feu stop (53), aux clignotants (41) ou à l'avertisseur sonore (47) est défini comme un mode de non-alimentation de composant électrique instable ; et
le régulateur (33) est agencé de manière à réduire la puissance électrique fournie au composant électrique de réduction de puissance électrique, quand la tension appliquée (Vs) est inférieure à la première valeur de tension (VH) en période d'état de marche au ralenti sans batterie rechargeable embarquée (35) et de mode d'alimentation de composant électrique instable, pour que celle-ci soit inférieure à la puissance électrique délivrée en période d'état de marche au ralenti sans batterie rechargeable embarquée (35) et de mode de non-alimentation de composant électrique instable.

4. Véhicule à selle (1) selon l'une quelconque des revendications 1 à 3, où le régulateur (33) est agencé de manière à réduire la puissance électrique fournie au composant électrique de réduction de puissance électrique en réponse à la réduction de la tension appliquée (Vs), lorsque la tension appliquée (Vs) est comprise dans une gamme prédéterminée.

5. Véhicule à selle (1) selon l'une quelconque des revendications 1 à 4, où le régulateur (33) inclut :
un détecteur de tension (82) pour détecter une tension appliquée (Vs) au dispositif de démarrage (71), aux composants électriques (72) et au régulateur (33) ; et un ajusteur de puissance électrique (83, 84, 85) pour ajuster la puissance électrique fournie au composant électrique de réduction de puissance électrique en fonction de la tension appliquée (Vs) détectée par le détecteur de tension (82).

6. Véhicule à selle (1) selon la revendication 5, où l'ajusteur de puissance électrique (83, 84, 85) est agencé de façon à modifier l'ampleur de la réduction de la puissance électrique fournie au composant électrique de réduction de puissance électrique en fonction de la tension appliquée (Vs).

7. Véhicule à selle (1) selon l'une quelconque des revendications 1 à 6, où la consommation de puissance maximale du composant électrique de réduction de puissance électrique est supérieure à une consommation de puissance maximale d'un des éléments parmi le feu stop (53), les clignotants (41) et l'avertisseur sonore (47).

8. Véhicule à selle (1) selon l'une quelconque des revendications 1 à 7, où le feu avant (39) est le composant électrique de réduction de puissance électrique.

9. Véhicule à selle (1) selon l'une quelconque des revendications 1 à 8, où la puissance électrique générée par la dynamo (21) lorsque le moteur (15) est dans un état de marche au ralenti est supérieure à la première puissance consommée (P1) qui est la somme des puissances consommées maximales du dispositif de démarrage (71), du feu avant (39), du feu arrière (51) et du régulateur (33), et qui est inférieure à la seconde puissance consommée (P2) qui est la somme des plus petites puissances consommées maximales parmi les puissances consommées maximales du feu stop (53), des clignotants (41), et de l'avertisseur sonore (47) et de la première puissance consommée (P1).

10. Véhicule à selle (1) selon l'une quelconque des revendications 1 à 9, où le régulateur (33) est agencé de façon à ne permettre aucune alimentation en puissance électrique du composant électrique de réduction de puissance électrique lors du démarrage du moteur (15).

11. Véhicule à type selle (1) selon l'une quelconque des revendications 1 à 10, où le véhicule à selle (1) inclut un capteur de fréquence de rotation (87) pour détecter la fréquence de rotation du moteur (15) ; et
le régulateur (33) est agencé de façon à obtenir la fréquence de rotation en se fondant sur le résultat de la détection du capteur de fréquence de rotation (87) et déterminer le moment adéquat pour commencer à fournir de la puissance électrique au composant électrique de réduction de puissance électrique en se fondant sur la fréquence de rotation acquise.

12. Véhicule à selle (1) selon la revendication 11, où, dans un état où la fréquence de rotation acquise étant au moins égale à un premier seuil s'est poursuivie pendant une période prédéterminée, le régulateur (33) est agencé de façon à commencer à fournir de la puissance électrique au composant électrique de réduction de puissance électrique.

13. Véhicule à selle (1) selon la revendication 11 ou 12, où, lorsque la fréquence de rotation acquise est au moins égale à un second seuil supérieur au premier seuil, le régulateur (33) est agencé de façon à commencer à fournir de la puissance électrique au composant électrique de réduction de puissance électrique.
